# EUROPEAN PATENT APPLICATION

(11) **EP 4 369 485 A1**
(43) Date of publication of application: **15.05.2024**
(21) Application number: 22898932.3
(22) Date of filing: 15.11.2022
(51) Int. Cl.: H01M 50/204

(54) **BATTERY PACK AND DEVICE INCLUDING SAME**

(30) Priority: 29.11.2021 KR 20210167368; 08.11.2022 KR 20220147907
(71) Applicant: LG Energy Solution, Ltd., Seoul 07335 (KR)
(72) Inventor: SEOL, Jae Jung, Daejeon 34122 (KR); YOON, Seog Jin, Daejeon 34122 (KR)
(74) Representative: Goddar, Heinz J.
(86) International application number: PCT/KR2022/018019
(87) International publication number: WO 2023/096250

(57) **Abstract**

The present disclosure relates to a battery pack and a device including the same, and a battery pack according to one embodiment of the present disclosure includes a plurality of battery modules; a case cover for covering the plurality of battery modules, and a case plate coupled to an edge of the case cover; and a gasket that is arranged in a groove of the case plate located in correspondence to the edge of the case plate, wherein the case plate comprises a first side surface plate covering both side surfaces of the plurality of battery modules, and a second side surface plate covering the front and rear surfaces of the plurality of battery modules, and wherein the gasket includes a rib.

## Description

### [TECHNICAL FIELD]

### Cross Citation with Related Application(s)

This application claims the benefit of Korean Patent Application No. 10-2021-0167368 filed on November 29, 2021 and Korean Patent Application No. 10-2022-0147907 filed on November 8, 2022 in the Korean Intellectual Property Office, the entire contents of which are incorporated herein by reference.

The present disclosure relates to a battery pack and a device including the same, and more particularly, to a battery pack which is improved in assembly property and waterproof performance, and a device including the same.

### [BACKGROUND]

With the technology development and increased demand for mobile devices, demand for secondary batteries as energy sources has been rapidly increasing. A variety of researches on batteries capable of meeting various needs have been carried out accordingly.

Also, the secondary battery has attracted considerable attention as a power source for an electric vehicle (EV), a hybrid electric vehicle (HEV), a plug-in hybrid electric vehicle (P-HEV) and the like, which have been developed to solve air pollution and the like, caused by existing gasoline and diesel vehicles using fossil fuel.

Therefore, electric vehicles (EVs) that can be operated only by a battery alone, hybrid electric vehicles (HEVs) that use a combination of a battery and an existing engine, and the like have been developed, and some vehicles are commercially available. As a power source of EVs, HEVs, and the like, a secondary battery is mainly used, such as Nickel metal hybride secondary battery. However, recently, research into lithium secondary batteries having high energy density, high discharge voltage and output stability is actively underway.

When such a secondary battery is used as a power source of a vehicle, the secondary battery is used in the form of a battery pack including a plurality of battery modules or battery module assemblies. A vehicle battery pack allows a gasket made of a rubber to locate at a junction between the cases in order to seal the battery pack. However, depending on the shape of the case, a step difference may occur at a portion where the cases are in contact with each other, and an assembly error may occur.

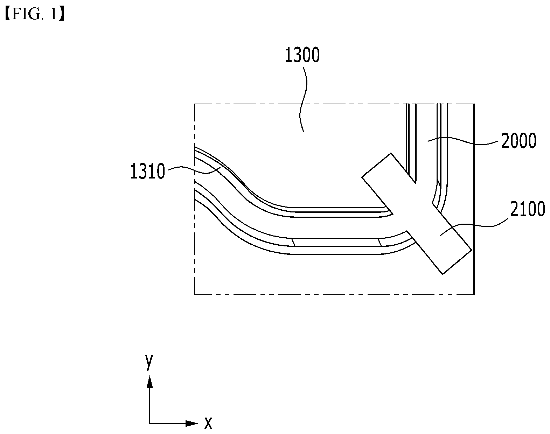

Fig. 1 is a view showing the shape of a gasket located in a conventional battery pack.

Referring to Fig. 1, one surface of the battery pack cases 13 constituting the conventional battery pack 10 includes a groove 14 where a gasket 20 is located. The gasket 20 corresponds to the shape of the groove 14, and the gasket 20 may include a protrusion 22. A width of one area of the gasket 20 including the protrusion 22 may be greater than that of the groove 14. Therefore, the protrusion 22 and the groove 14 may partially overlap, and the gasket 20 including the protrusion 22 can be assembled while being forcibly fitted into the groove 14.

However, in this case, if the gasket 20 is not properly assembled to the groove 14, and some areas of the gasket 20 overlap each other or are separated from the groove 14, there is a problem that waterproof performance cannot be properly secured. Therefore, there is a need to derive a gasket that improves assembly properties in an attempt to solve the above problems.

### [DETAILED DESCRIPTION OF THE INVENTION]

### [Technical Problem]

It is an object of the present disclosure to provide a battery pack which is improved in assembly property and waterproof performance, and a device including the same.

However, the technical problem to be solved by embodiments of the present disclosure is not limited to the above-described problems, and can be variously expanded within the scope of the technical idea included in the present disclosure.

### [Technical Solution]

According to one embodiment of the present disclosure, there is provided a battery pack comprising: a plurality of battery modules; a case cover for covering the plurality of battery modules, and a case plate coupled to an edge of the case cover; and a gasket that is arranged in a groove of the case plate located in correspondence to the edge of the case plate, wherein the case plate comprises a first side surface plate covering both side surfaces of the plurality of battery modules, and a second side surface plate covering the front and rear surfaces of the plurality of battery modules, and wherein the gasket includes a rib.

At least one rib may be provided so as to be spaced apart along the length of the gasket.

The rib may be provided while being in contact with one surface of the case plate.

The lower surface of the rib may be provided while being in contact with the outer peripheral surface of the case plate.

The upper surface of the rib may be located on the same line as the outer peripheral surface of the gasket.

The rib is located in a second area, which is one area of the gasket corresponding to the shape of the edge of the first side surface plate, and a third area, which is an area in which the gasket corresponds to the shape of the edge of the first side surface plate and has a curvature, and the number of the rib per area may be higher in the third area than in the second area.

The rib may be formed in a direction perpendicular to the longitudinal direction of the gasket.

The rib may have a bar shape.

A height of the rib may be smaller than a height of the gasket.

The rib may be made of an elastic material.

The rib may be made of a rubber.

In the battery pack according to another embodiment of the present disclosure, the gasket further comprises at least one protrusion that is provided so as to be spaced apart along the length of the gasket.

The protrusion may be located on an outer peripheral surface of the gasket.

The protrusion may be located while being in contact with one surface of the groove.

The protrusion may have a shape protruding in the width direction of the gasket.

A width of one area of the gasket including the protrusion may be greater than that of the gasket.

One area of the gasket including the protrusion may be forcibly fitted while overlapping with the groove.

The protrusion may be located on an outer peripheral surface of one area of the gasket where the rib is located.

The protrusion may be located on both surfaces of the gasket connected with one surface of the gasket where the rib is located.

A height of the gasket may be greater than a height of the groove.

A width of the gasket may be smaller than a width of the groove.

### [Advantageous Effects]

According to embodiments of the present disclosure, a visually discernible rib is added to the gasket, thereby being able to improve assembly property and cooling performance.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

Fig. 1 is a view showing the shape of a gasket located in a conventional battery pack;
Fig. 2 is a perspective view of a battery pack according to one embodiment of the present disclosure;
Fig. 3 is an exploded perspective view of a battery pack according to one embodiment of the present disclosure;
Fig. 4 is a diagram showing a first side surface plate according to one embodiment of the present disclosure;
Figs. 5 and 6 are diagrams showing a state in which a gasket is assembled in a region A1 of Fig. 4;
Figs. 7 and 8 are diagrams showing a state in which a gasket is not properly assembled in an area A1 of Fig. 4; and
Fig. 9 is a diagram showing a protrusion of a gasket in an area A1 of Fig. 4.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

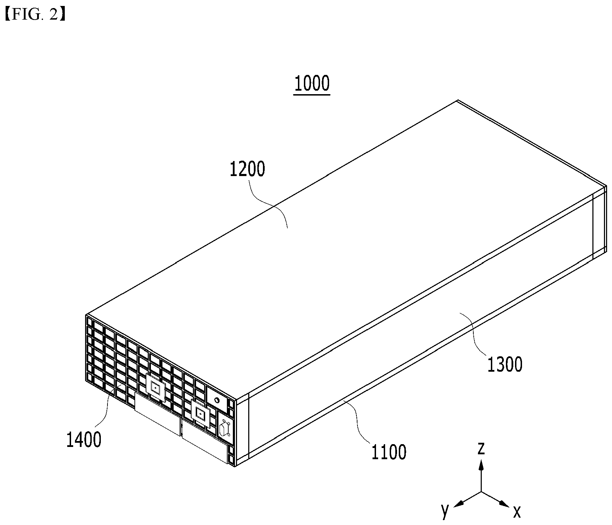

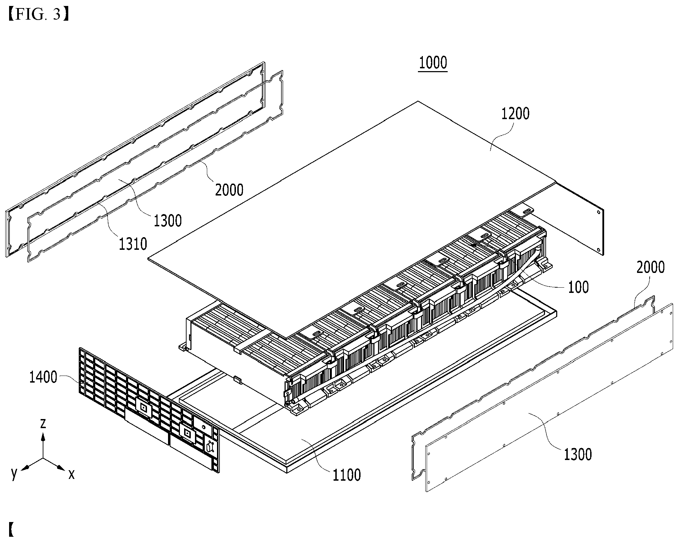

Fig. 2 is a perspective view of a battery pack according to one embodiment of the present disclosure. Fig. 3 is an exploded perspective view of a battery pack according to one embodiment of the present disclosure.

Referring to Figs. 2 and 3, the battery pack 1000 according to one embodiment of the present disclosure includes a case cover 1200 for covering the plurality of battery modules 100 and case plates 1300 and 1400 coupled to the edge of the case cover 1200.

Specifically, the battery pack 1000 according to one embodiment of the present disclosure includes a lower plate 1100 on which a plurality of battery modules 100 are mounted, a case cover 1200 provided while covering the upper surface (z-axis direction) of the plurality of battery modules 100 and a first side surface plate 1300 and a second side surface plate 1400 coupled to the edge of the case cover 1200. The first side surface plate 1300 is provided while covering the side surface (y-axis direction) of the plurality of battery modules 100, and the second side surface plate 1400 is provided while covering the front and rear surfaces (x-axis direction and -x-axis direction) of the battery module 100. A gasket 2000 may be provided in the grooves of the first side surface plate 1300 and the second side surface plate 1400 in correspondence to the edge of the case cover 1200.

The battery module 100 may include a battery cell stack and a module frame in which a plurality of battery cells are stacked in a preset direction. The module frame may include an upper frame and a lower frame, and the battery cell stack may be mounted between the upper frame and the lower frame to form the battery module 100. However, the module frame is not limited to the contents described above, and may be a mono-frame in the form of a metal plate material in which the upper and lower surfaces and both side surfaces are integrated.

Here, the type of the battery cell is not particularly limited, so it may be a pouch-type secondary battery or a prismatic secondary battery, but the pouch-type secondary battery is preferable.

A heat sink may be provided on the lower plate 1100, and at least one battery module 100 may be mounted on the heat sink. The size of the heat sink may correspond to the size of the battery module 100, or may be larger than the size of the battery module 100.

The case cover 1200 may be a plate that covers the upper parts of the plurality of battery modules 100. The case cover 1200 may have a size corresponding to that of the lower plate 1100.

The first side surface plate 1300 may be a plate that covers both side surfaces of the plurality of battery modules 100. One facing edge of the first side surface plate 1300 can be fastened using a fastening member or coupled by welding or the like in correspondence to one edge of the lower plate 1100 and one edge of the case cover 1200.

The first side surface plate 1300 includes a groove 1310 to which the gasket 2000 is mounted. The groove 1310 may be an area that is excavated to a certain depth along the edge of the first side surface plate 1300. The groove 1310 may be an area that is excavated to a certain depth along the edge of the first side surface plate 1300 facing the plurality of battery modules 100. A gasket 2000 may be located in the groove 1310.

The gasket 2000 is a member that is further positioned on the first side surface plate 1300, and when the first side surface plate 1300 is coupled with other components constituting the battery pack 1000, it can improve the degree of sealing, thereby improving waterproof and dustproof performance of the battery pack 1000.

The second side surface plate 1400 may be a plate that covers the front and rear surfaces of the plurality of battery modules 100. The upper edge of the second side surface plate 1400 corresponds to one edge of the case cover 1200, the lower edge of the second side surface plate 1400 corresponds to one edge of the lower plate 1100, both side edges of the second side surface plate 1400 correspond to one edge of the two first side surface plates 1400, respectively, which can thus be fastened using a fastening member or coupled by a method such as welding.

In this figure, the gasket 2000 is shown as being mounted in the groove 1310 of the first side surface plate 1300, but is not limited thereto, and the gasket 2000 may be mounted in the groove of the second side surface plate 1400.

The lower plate 1100, the case cover 1200, the first side surface plate 1300, and the second side surface plate 1400 may be made of a material having stiffness. Therefore, it is possible to protect the plurality of battery modules 100 and electrical components connected thereto from external physical impact.

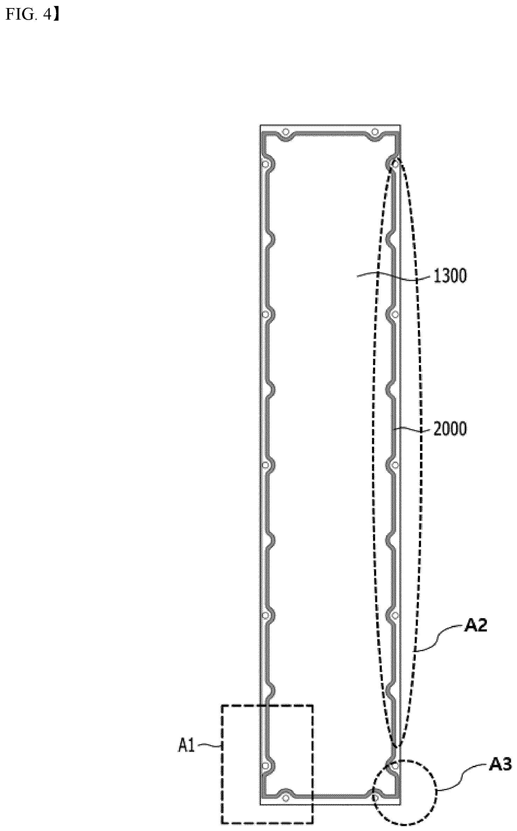

Fig. 4 is a diagram showing a first side surface plate according to one embodiment of the present disclosure.

Referring to Fig. 4, the gasket 2000 may be mounted in the groove of the first side surface plate 1300 according to one embodiment of the present disclosure.

The gasket 2000 may be located along an edge of the first side surface plate 1300. The gasket 2000 may be located in a groove that is excavated to a certain depth along the edge of the first side surface plate 1300. The gasket 2000 may be fitted into the groove.

The shape of the gasket 2000 may correspond to the shape of an edge of the first side surface plate 1300. The shape of the gasket 2000 may correspond to the shape of the groove of the first side surface plate 1300. The width of the gasket 2000 may be smaller than the width of the groove, or the height of the gasket 2000 may be higher than the height of the groove.

The gasket 2000 may be made of an elastic material. For example, the gasket 2000 may be made of a rubber. Therefore, when pressure is applied to the gasket 2000, the shape of the gasket 2000 may change as pressure is applied. For example, when pressure is applied to the gasket 2000, the shape of the gasket 2000 mounted on the groove may be changed so that no empty space may be formed in the groove. Therefore, it is possible to prevent moisture or dust from entering the battery pack from the outside.

The gasket 2000 prevents separation from the groove 1300 during assembly or overlapping of some areas of the gasket 2000 with each other, and may include a visually discernible rib (described later) in order to improve assemble property. In addition, the gasket 2000 may include a protrusion (described later) that can be forcibly fitted so that some areas overlap with the groove, in order to improve the fixing force when fitting with the groove. The rib and the protrusion will be described in detail below.

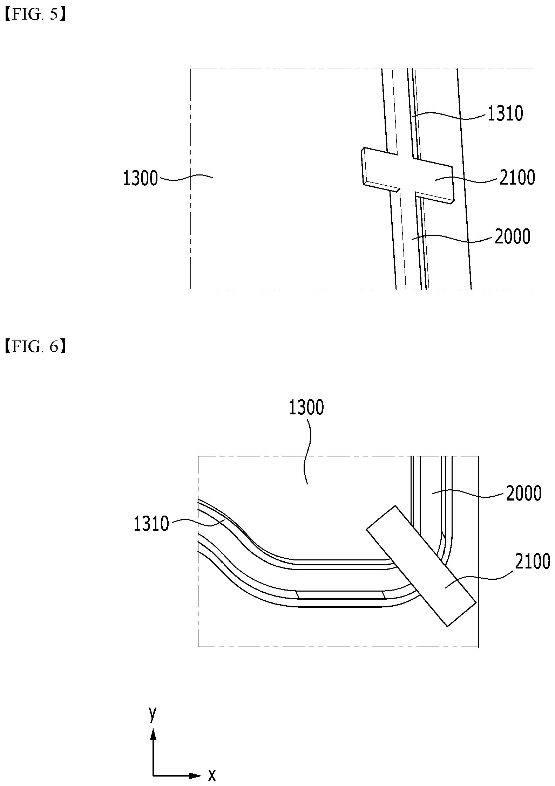

Figs. 5 and 6 are diagrams showing a state in which a gasket is assembled in a region A1 of Fig. 4.

Referring to Figs. 5 and 6, a gasket 2000 according to one embodiment of the present disclosure includes a visually discernible rib 2100.

The rib 2100 is located in one area of the gasket 2000, and can confirm whether the gasket 2000 is properly fitted into the groove 1310 of the first side surface plate 1300. Specifically, as shown in Figs. 5 and 6, the rib 2100 is located outside the groove 1310, so that if the shape of the rib 2100 can be visually discerned, it may be properly coupled.

At least one rib 2100 may be provided so as to be spaced apart along the length of the gasket 2000. The ribs 2100 per area can vary in number per area in an area where the gasket 2000 extends along one edge of the first side surface plate 1300, and an area constituting the corner part which is an edge of the first side surface plate 1300.

Specifically, the ribs 2100 may be located in the second area A2 and the third area A3 of Fig. 4. More ribs 2100 may be located in the third area A3 than in the second area A2 of Fig. 4. That is, the number of ribs 2100 per area of the gasket 2000 larger in the third area A3 may be larger than in the second area A2 of Fig. 4.

The second area A2 may be an area in which the gasket 2000 does not have a curvature. That is, the second area A2 may be one area of the gasket 2000 corresponding to the shape of the edge of the first side surface plate 1300.

The third area A3 may be an area in which the gasket 2000 has a curvature in correspondence to the shape of the edge of the first side surface plate 1300. That is, the third area A3 may be one area of the gasket 2000 located at the edge of the first side surface plate 1300.

The third area A3, which is the area where the gasket 2000 has a curvature, may not be easily assembled due to an assembly tolerance or the like, as compared to the second area A2 where the gasket 2000 does not have a curvature. Therefore, more ribs 2100 are arranged in the third area, thereby being able to improve the assembly efficiency of the battery.

The rib 2100 may have a bar shape formed in a direction perpendicular to the longitudinal direction of the gasket 2000. However, the shape of the rib 2100 is not limited thereto, and any shape is possible as long as the shape of the rib 2100 can be visually discerned.

One surface of the rib 2100 may be located while being in contact with one surface of the first side surface plate 1300. Specifically, the lower surface of the rib 2100 may be located while being in contact with the outer peripheral surface of the first side surface plate 1300. That is, the lower surface of the rib 2100 may be located while being in contact with the upper surface of the first side surface plate 1300.

An upper surface of the rib 2100 may be placed on the same plane as an outer peripheral surface of the gasket 2000. The rib 2100 may be a portion extending in a direction perpendicular to the longitudinal direction of the gasket 2000.

The width of the rib 2100 may correspond to the width of the gasket 2000, or may be wider or narrower than the width of the gasket 2000. The height of the rib 2100 may be lower than that of the gasket 2000. For example, the height of the rib 2100 may be 2 to 3 mm. The height of the rib 2100 may be the extent that the waterproof and dustproof performance of the battery pack is not affected when pressure is applied in the height direction.

The rib 2100 may be made of the same material as the gasket 2000. The rib 2100 may be made of an elastic material. For example, the rib 2100 may be made of a rubber. Therefore, when pressure is applied to the rib 2100, the shape of the rib 2100 may be changed as pressure is applied.

The gasket 2000 may be smaller than the width (x-axis direction or y-axis direction) of the groove 1310 of the first side surface plate 1300. However, the height of the gasket 2000 is higher than that of the groove 1310, and thus, if pressure is applied in the height direction of the gasket 2000 when the first side surface plate 1300 is in contact with the lower plate, the case cover, the second side surface plate, and the like, the shape of the gasket 2000 may change while spreading in the width direction. Therefore, the space between the groove 1310 and the gasket 2000 is filled so that moisture or dust from the outside may not enter the battery pack. In this case, if pressure is applied also in the height direction of the rib 2100, the rib 2100 can change to a flatter shape, so that the lowered height of the rib 2100 may not affect the waterproof and dustproof performance of the battery pack.

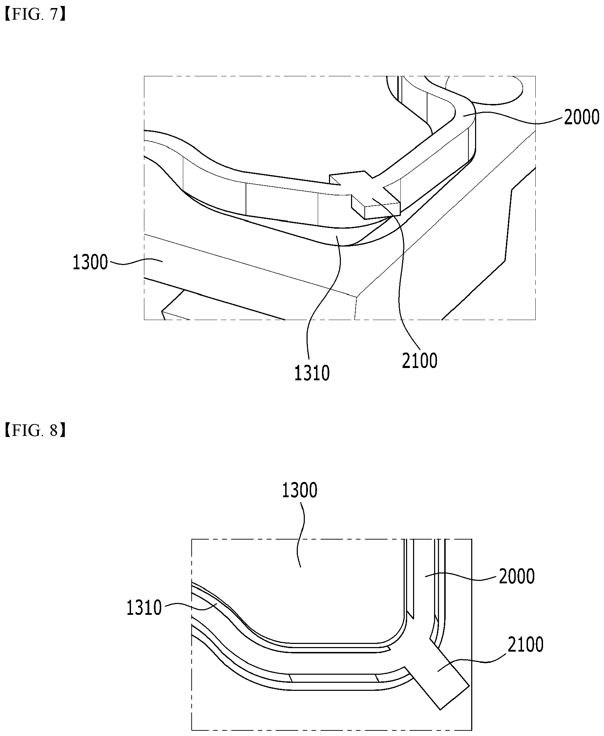

Figs. 7 and 8 are diagrams showing a state in which a gasket is not properly assembled in an area A1 of Fig. 4.

Referring to Fig. 7, if the gasket 2000 according to one embodiment of the present disclosure is not properly fitted into the groove 1310 of the first side surface plate 1300, the rib 2100 may be detached without contacting the first side surface plate 1300.

In this case, it can be visually discerned that the gasket 2000 in the area adjacent to the detached rib 1310 is not properly fitted into the groove 1310. Therefore, it is possible to prevent deterioration in waterproof and dustproof performance of the battery pack due to improper assembly of the gasket 2000.

Referring to Fig. 8, when the gasket 2000 according to one embodiment of the present disclosure is not properly fitted into the groove 1310 of the first side surface plate 1300, a part of the rib 2100 enters the groove 1310, so that the entire shape of the rib 2100 may not be visually discerned.

In this case, it can be visually discerned that the gasket 2000 in the area adjacent to the area where a part of the rib 2100 is inserted into the groove 1310 is not properly fitted into the groove 1310. Thereby, it is possible to prevent deterioration in waterproof and dustproof performance of the battery pack due to improper assembly of the gasket 2000.

Therefore, the shape of the rib 2100, and whether the position of the rib 2100 is in contact with one surface of the first side surface plate 1300 can be visually discerned, and thus, whether or not the assembly of the gasket 2000 is defective can be intuitively known. Therefore, not only the waterproof and dustproof performance of the battery pack, but also the assemble property can be improved.

Further, the gasket 2000 may include a protrusion (described later) that may be forcibly fitted to overlap a portion of the groove, in order to improve the fixing force when fitting with the groove.

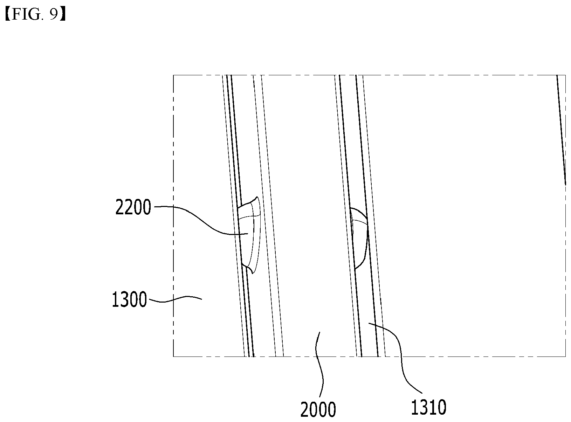

Fig. 9 is a diagram showing a protrusion of a gasket in an area A1 of Fig. 4.

Referring to Fig. 9, a gasket 2000 according to one embodiment of the present disclosure includes a protrusion 2200.

At least one protrusion 2200 may be provided so as to be spaced apart along the length of the gasket 2000. The protrusion 2200 may be located on an outer peripheral surface of the gasket 2000. The protrusions 2200 may be located on both surfaces of the outer peripheral surface of the gasket 2000. The protrusions 2200 may be located on both opposite sides of the gasket 2000. The protrusion 2200 may be located while being in contact with one surface of the groove 1310.

The protrusion 2200 may have a semicircular shape that protrudes in the width direction of the gasket 2000. However, the protrusion 2200 may have any shape as long as it protrudes from the gasket 2000, and is not limited to the shape shown in the figure.

A width of one area of the gasket 2000 including the protrusion 2200 may be greater than a width of one area of the gasket 2000 that does not include the protrusion 2200. Also, a width of one area of the gasket 2000 including the protrusion 2200 may be greater than that of the groove 1310. Therefore, one area of the gasket 2000 in which the protrusion 2200 is provided may be forcibly fitted into the groove 1310. In this case, the shape of the protrusion 2200 may be partially deformed so that it can be forcibly fitted while overlapping with the groove 1310. Consequently, the gasket 2000 may not be separated from the groove 1310, thereby improving waterproof and dustproof performance, and also improving assembly property.

Although not shown in this figure, the protrusion 2200 may be located in the same area as one area of the gasket 2000 where the rib is located. Specifically, the protrusion 2200 may be located on one surface of the gasket 2000 where the rib is located and on both surfaces of the gasket 2000 connected thereto. That is, when the ribs are located on the upper surface of the outer peripheral surface of the gasket 2000, the protrusions 2200 may be located on both side surfaces of the outer peripheral surface of the gasket 2000.

Although the gasket 2000 described above has been described as being mounted in the groove 1310 of the first side surface plate, it is not limited thereto, and the gasket 2000 can be mounted in the groove of the second side surface plate.

The above-mentioned battery pack can be applied to various devices. Such a device can be applied to a vehicle means such as an electric bicycle, an electric vehicle, or a hybrid vehicle, but the present disclosure is not limited thereto, and is applicable to various devices that can use a battery module or a battery pack including the same, which also falls within the scope of the present disclosure.

Although preferred embodiments of the present disclosure have been described in detail above, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

1000: battery pack
1100: lower plate
1200: case cover
1300: first side surface plate
1310: groove
1400: second side surface plate
2000: gasket
2100: rib
2200: protrusion

## Claims

1. A battery pack comprising:
a plurality of battery modules;
a case cover for covering the plurality of battery modules, and a case plate coupled to an edge of the case cover; and
a gasket that is arranged in a groove of the case plate located in correspondence to the edge of the case plate,
wherein the case plate comprises a first side surface plate covering both side surfaces of the plurality of battery modules, and a second side surface plate covering the front and rear surfaces of the plurality of battery modules, and
wherein the gasket includes a rib.

2. The battery pack according to claim 1, wherein:
at least one rib is provided so as to be spaced apart along the length of the gasket.

3. The battery pack according to claim 1, wherein:
the rib is provided while being in contact with one surface of the case plate.

4. The battery pack according to claim 3, wherein:
the lower surface of the rib is provided while being in contact with the outer peripheral surface of the case plate.

5. The battery pack according to claim 1, wherein:
the upper surface of the rib is located on the same line as the outer peripheral surface of the gasket.

6. The battery pack according to claim 1, wherein:
the rib is located in a second area, which is one area of the gasket corresponding to the shape of the edge of the first side surface plate, and a third area, which is an area in which the gasket corresponds to the shape of the edge of the first side surface plate and has a curvature, and
the number of the rib per area is higher in the third area than in the second area.

7. The battery pack according to claim 1, wherein:
the rib is formed in a direction perpendicular to the longitudinal direction of the gasket.

8. The battery pack according to claim 7, wherein:
the rib has a bar shape.

9. The battery pack according to claim 1, wherein:
a height of the rib is smaller than a height of the gasket.

10. The battery pack according to claim 1, wherein:
the rib is made of an elastic material.

11. The battery pack according to claim 10, wherein:
the rib is made of a rubber.

12. The battery pack according to claim 1, wherein:
the gasket further comprises at least one protrusion that is provided so as to be spaced apart along the length of the gasket.

13. The battery pack according to claim 12, wherein:
the protrusion is located on an outer peripheral surface of the gasket.

14. The battery pack according to claim 12, wherein:
the protrusion is located while being in contact with one surface of the groove.

15. The battery pack according to claim 12, wherein:
the protrusion has a shape protruding in the width direction of the gasket.

16. The battery pack according to claim 12, wherein:
a width of one area of the gasket including the protrusion is greater than that of the gasket.

17. The battery pack according to claim 16, wherein:
one area of the gasket including the protrusion is forcibly fitted while overlapping with the groove.

18. The battery pack according to claim 12, wherein:
the protrusion is located on an outer peripheral surface of one area of the gasket where the rib is located.

19. The battery pack according to claim 18, wherein:
the protrusion is located on both surfaces of the gasket connected with one surface of the gasket where the rib is located.

20. The battery pack according to claim 1, wherein:
a height of the gasket is greater than a height of the groove.

21. The battery pack according to claim 1, wherein:
a width of the gasket is smaller than a width of the groove.
